Europäisches Patentamt

European Patent Office

Office européen des brevets

(11) Veröffentlichungsnummer: **0 447 996 A1**

## (12) EUROPÄISCHE PATENTANMELDUNG

(21) Anmeldenummer: **91104082.2**

(22) Anmeldetag: **16.03.91**

(51) Int. Cl.⁵: **B23D 43/00**

(30) Priorität: **23.03.90 CH 973/90**

(43) Veröffentlichungstag der Anmeldung:
**25.09.91 Patentblatt 91/39**

(84) Benannte Vertragsstaaten:
**CH DE FR GB IT LI SE**

(71) Anmelder: **FÄSSLER AG**
**Ringstrasse 20**
**CH-8600 Dübendorf(CH)**

(72) Erfinder: **Fässler, Albert**
**Hörnlistrasse 17**
**CH-8600 Dübendorf(CH)**

(74) Vertreter: **Patentanwälte Schaad, Balass &**
**Partner**
**Dufourstrasse 101 Postfach**
**CH-8034 Zürich(CH)**

(54) **Räumwerkzeug.**

(57) Das Räumwerkzeug, vorzugsweise eine Räumnadel, weist einen Grundkörper (26) auf, der mit einer Beschichtung (28) versehen ist. Die Beschichtung (28) besteht aus einer Trägerschicht (40) mit darin eingebetteten Diamantkörnern (42). Die Aussenfläche (24) des Grundkörpers (26) steigt von seinem in Ziehrichtung (20) vorderen Ende (34) in Richtung seines hinteren Endes (36) an. Die darauf gelagerten, im wesentlichen eine einheitliche Grösse aufweisenden Diamantkörner (42) sind parallel zu einer in Ziehrichtung (20) liegenden Fläche (38) angeschliffen. Dadurch ergibt sich ein vom vorderen Ende (34) in Richtung des hinteren Endes (36) stetig zunehmender Anschliff. Dieser bewirkt, dass die vorderen, weniger angeschliffenen Diamantkörner mehr von der zu bearbeitenden Werkstückoberfläche abtragen, während die nachfolgenden, stärker angeschliffenen eine schlichtende Wirkung ausüben. Die Folge ist eine besonders feine Oberfläche mit geringer Rauhtiefe.

Fig.8

Die Erfindung bezieht sich auf ein Räumwerkzeug nach dem Oberbegriff des Anspruchs 1 sowie auf ein Verfahren zur Herstellung des Räumwerkzeuges nach Anspruch 8.

Solche Räumwerkzeuge dienen insbesondere als Diamanträumnadeln zur Fein- oder Nachbearbeitung hochpräziser gehärteter Werkstücke. Es lassen sich damit beispielsweise Bohrungen, Evolventenverzahnungen, Kerbverzahnungen, Keilverzahnungen, Keilnuten sowie weitere Innenprofile bearbeiten.

Da diese Räumwerkzeuge nicht zur Formgebung bestimmt sind, ist die Arbeitsfläche der Diamantkörner in der Regel parallel zur Ziehrichtung angeschliffen. Es wird dabei davon ausgegangen, dass die zu bearbeitenden Werkstücke an ihren Oberflächen durch die daran angreifenden Diamantkörner nicht nur abgetragen, sondern auch elastisch deformiert werden; mit anderen Worten ausgedrückt, dass sie einfedern. Diese Deformation sowie die durch die Diamantkörner vom Werkstück abgetragene Schicht ist am Anfang der Räumwerkzeuge am grössten und nimmt gegen das Ende hin ab.

Wegen des zur Ziehrichtung parallelen Anschliffs sind in der Praxis bekannte Räumwerkzeuge dieser Art auch mit einem Grundkörper ausgestattet, dessen beschichtete Aussenfläche ebenfalls parallel zur Ziehrichtung verläuft.

Demzufolge ist die Beschichtung gleichmässig dick und die Diamantkörner sind gleichmässig angeschliffen. Trotzdem befriedigt das Ergebnis der Feinbearbeitung nur teilweise, da die damit erzielbaren Oberflächen immer noch eine für viele Anwendungen zu grosse Rauhtiefe aufweisen. Der Erfindung liegt deshalb die Aufgabe zugrunde, ein Räumwerkzeug zu schaffen, das in einem Arbeitsgang neben einer besonders feinen und massgenauen Nachbearbeitung eines Werkstückes auch eine Oberfläche kleinstmöglichster Rauhtiefe gewährleistet. Ferner soll ein Verfahren zur Herstellung eines solchen Räumwerkzeuges angegeben werden.

Die gestellte Aufgabe wird durch die kennzeichnenden Merkmale des Anspruchs 1 sowie durch die Merkmale des Anspruchs 8 gelöst.

Der Erfindung liegt die Erkenntnis zugrunde, dass die im vorstehenden Sinn weniger angeschliffenen Schleifkörner eine grössere spanabhebende Wirkung ausüben, als die stärker angeschliffenen. Die stärker angeschliffenen Schleifkörner weisen im Gegensatz dazu eine schlichtende und die Oberfläche glättende Wirkung auf. So ergibt sich durch die erfindungsgemässe Lösung in einem Arbeitsgang eine äusserst genaue Fein-Nachbearbeitung der betreffenden Werkstückoberfläche bei geringster Rauhtiefe.

Eine bevorzugte Ausführungsform nach Anspruch 2 gewährleistet trotz der unterschiedlich angeschliffenen Schleifkörner eine sichere Verankerung dieser in der Trägerschicht.

Bei einer Ausführungsform nach Anspruch 3 wird davon ausgegangen, dass sich die Schleifkörner beim Einbetten in die Trägerschicht auf der Aussenfläche des Grundkörpers abstützen, so dass sie infolge ihrer im wesentlichen einheitlichen Grösse gleichmässig aus der Trägerschicht herausragen, um einen unterschiedlichen Anschliff zu unterstützen.

Die Ansprüche 4 und 5 weisen auf bevorzugte, die erfindungswesentlichen Merkmale unterstützende Ausführungsformen hin.

Der Anspruch 6 beschreibt ein Räumwerkzeug in einer der geometrisch einfachsten Ausführungsformen zum Bearbeiten einer Bohrung.

Das Räumwerkzeug nach Anspruch 7 kann beispielsweise zur Bearbeitung einer Innenverzahnung dienen.

Anhand der Zeichnungen werden Ausführungsbeispiele der Erfindung näher erläutert. Es zeigen:

Fig. 1    eine Diamanträumnadel im Längsschnitt, mit Diamanträumringen und Räumzahnrädern zum Räumen der Zahnflanken und des Zahngrundes von Innenverzahnungen,

Fig. 2    einen Querschnitt durch den Ziehkopf der Diamanträumnadel nach Fig. 1, entlang der Schnittlinie II-II,

Fig. 3    einen Querschnitt in einem grösseren Massstab durch ein Bruchstück eines Räumzahnrades gemäss der Schnittlinie III-III nach Fig. 1,

Fig. 4    einen Querschnitt in einem grösseren Massstab durch ein Bruchstück eines Diamanträumringes gemäss der Schnittlinie IV-IV nach Fig. 1,

Fig. 5    einen Querschnitt durch das Endstück der Diamanträumnadel nach Fig. 1, entlang der Schnittlinie V-V,

Fig. 6    eine Diamant- Flachräumnadel zum Räumen von Nuten,

Fig. 7    einen Querschnitt durch die Flachräumnadel nach Fig. 6 und

Fig. 8    einen Längsschnitt durch den Aufbau des Arbeitsbereiches der vorstehend dargestellten Diamanträumnadeln nach den Schnittlinien VIII-VIII in den Fig. 3, 4 und 7.

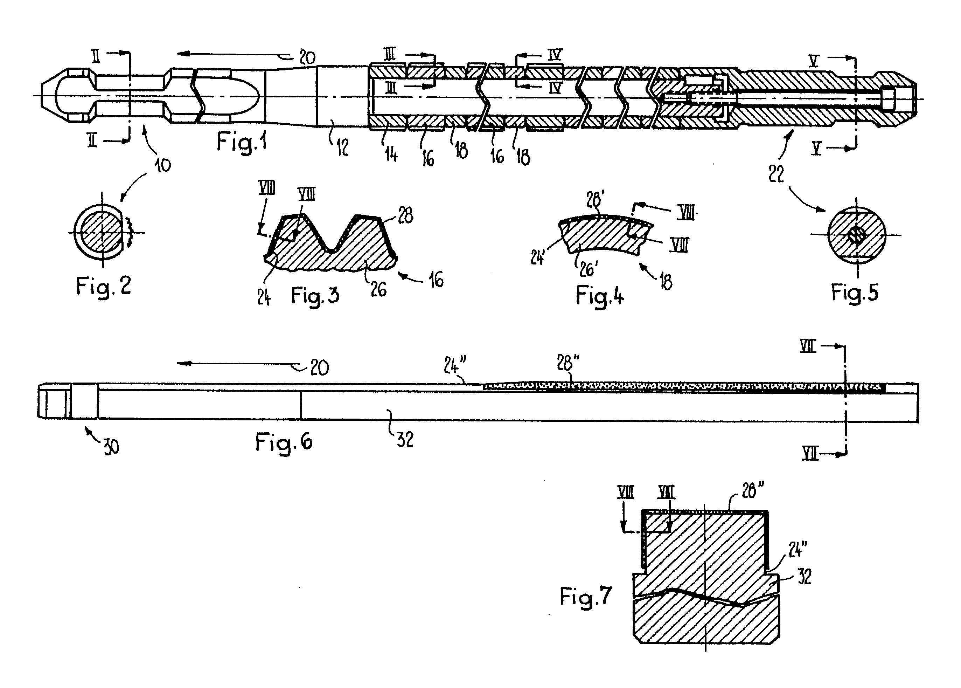

Die in der Fig. 1 dargestellte Diamanträumnadel weist einen Ziehkopf 10 auf, dem sich ein Ziehdorn 12 anschliesst. Auf dem Ziehdorn 12 sind ein Zentrierzahnrad 14 sowie abwechselnd Diamant-Räumzahnräder 16 und Diamanträumringe 18 angeordnet. Den in Ziehrichtung 20 hinteren Abschluss bildet ein Endstück 22.

Die Diamant-Räumzahnräder 16 dienen zum stufenweisen Feinbearbeiten von Zahnflanken einer nicht dargestellten Innenverzahnung. Die Diamanträumringe **18** dienen zum stufenweisen Feinbearbeiten der Kopfkreisdurchmesser-Flächen der nicht dargestellten Innenverzahnung.

Aus der Fig. 2 ist der Querschnitt durch den Ziehkopf **10** der Räumnadel ersichtlich.

Die Fig. 3 zeigt einen vergrösserten Querschnitt durch ein Bruchstück des Räumzahnrades **16**. Es ist insbesondere aus der Fig. 3 ersichtlich, dass auf der Aussenfläche **24** eines Grundkörpers **26** eine Beschichtung **28** aufgebracht ist. Die Beschichtung **28** besteht aus einer Trägerschicht mit darin eingebetteten Diamantkörnern, welche eine spanabhebende Arbeitsschicht bilden.

Die Fig. 4 zeigt einen vergrösserten Querschnitt durch ein Bruchstück des Diamanträumringes **18**. Auch bei diesem Ring ist auf der Aussenfläche **24'** eines Grundkörpers **26'** eine Beschichtung **28'** aufgebracht, die aus einer Trägerschicht mit darin eingebetteten Diamantkörnern besteht.

Aus der Fig. 5 ist der Querschnitt durch das Endstück **22** der Räumnadel ersichtlich.

Die in der Fig. 6 dargestellte, zur Feinbearbeitung von Nuten dienende Diamant-Flachräumnadel weist einen Ziehkopf **30** zum Ziehen in Pfeilrichtung **20** und einen Grundkörper **32** auf, auf dessen Aussenfläche **24''** eine Beschichtung **28''** als spanabhebende Arbeitsschicht aufgebracht ist. Diese enthält ebenfalls wie bei den zuvor dargestellten Ausführungsbeispielen eine Trägerschicht mit darin eingebetteten Diamantkörnern.

Aus dem in der Fig. 7 vergrössert dargestellten Querschnitt der Flachräumnadel nach der Fig. 6 ist ersichtlich, dass sich die Beschichtung **28''** über drei Seiten erstreckt.

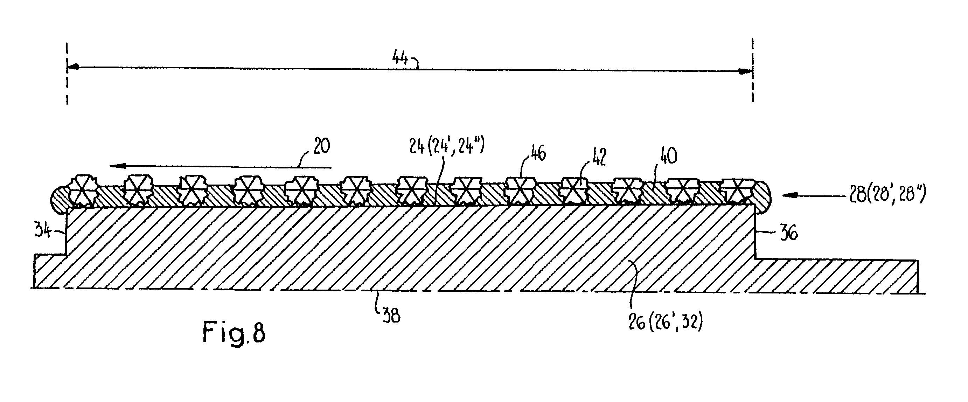

Die Fig. 8 zeigt in einem stark vergrösserten Massstab schematisch den Aufbau der Beschichtungen **28**, **28'** und **28''** nach den Schnittlinien VIII-VIII in den Fig. 3, 4 und 7. Aus dieser Fig. ist insbesondere ersichtlich, dass die beschichteten Aussenflächen **24**, **24'** und **24''** der Grundkörper **26**, **26'** und **32** von ihren in Ziehrichtung **20** vorn liegenden vorderen Enden **34** in Richtung der hinteren Enden **36** ansteigen, bezogen auf eine parallel zur Ziehrichtung **20** liegende Fläche **38**.

Die Beschichtungen **28**, **28'** und **28''** bestehen in einem Arbeitsbereich **44** aus einer Trägerschicht **40** und darin eingebetteten Diamantkörnern **42**. Die Diamantkörner **42** sind im wesentlichen einheitlich gross und überragen die mindestens annähernd gleichbleibend dicke Trägerschicht **40**, welche beispielsweise im wesentlichen aus Nickel bestehen kann. Die Beschichtung ist vorzugsweise etwa 0,2 mm dick.

Die Diamantkörner **42** sind auf ihrer sich parallel zur Ziehrichtung **20** erstreckenden Arbeitsfläche **46** angeschliffen. Der Anschliff nimmt vom vorderen Ende **34** in Richtung des hinteren Endes **36** stetig zu, da die Diamantkörner **42** auf der ansteigenden Aussenfläche **24**, **24'** und **24''** des Grundkörpers **26**, **26'**, **32** eingelagert sind.

Dieser unterschiedliche Anschliff bewirkt, dass die zuerst mit der zu bearbeitenden Werkstückoberfläche in Berührung kommenden Diamantkörner infolge ihrer kleineren Berührungsfläche mit einer grösseren Kraft pro Fläche am Werkstück angreifen als die nachfolgenden. Dadurch werden diese vorlaufenden Diamantkörner mehr Material abtragen. Im Gegensatz dazu ist die Berührungsfläche der nachfolgenden, stärker angeschliffenen Diamantkörner grösser. Daher ist deren am Werkstück angreifende Kraft pro Fläche geringer. Als Folge davon wirken diese nachlaufenden Diamantkörner im wesentlichen egalisierend und schlichtend auf die Werkstückoberfläche, welche dadurch besonders fein nachbearbeitet wird.

Die bereits bekannten Vorteile eines Diamant-Räumwerkzeuges, wie z.B. enge Toleranzen, Erhöhung der Plan- und Rundlaufgenauigkeit, erhöhter Traganteil, bessere Verschiebbarkeit, erhöhte Austauschbarkeit und der Wegfall von Paarungen werden durch die besonders feine Nachbearbeitung gemäss der Erfindung noch erhöht.

Zusätzlich ergibt sich durch die erfindungsgemässe Lösung eine besonders grosse Standzeit der Räumwerkzeuge, da die für die Masshaltigkeit zuständigen hinteren Schleifkörner indolge ihrer grösseren Auflagefläche weniger beansprucht werden.

Obwohl sich die vorliegenden Ausführungsbeispiele insbesondere auf Räumnadeln und damit auf Innenräumwerkzeuge beziehen, ist es auch möglich, nach dem gleichen Prinzip Aussenräumwerkzeuge herzustellen.

Die in den Ausführungsbeispielen genannten Diamantkörner können natürlicher oder synthetischer Art sein. Die Schleifkörner können aber auch je nach Verwendungszweck aus anderen Hartstoffen bestehen, z.B. aus Bornitrid (CBN), Korund, Siliciumcarbid (Karborundum) oder aus einem unter dem Markennamen "Syndite" bekannten Hartstoff.

Da mittels der Räumnadeln bei gehärteten Teilen der beim Härten entstehende Verzug ausegalisiert wird und da z.B. Innenverzahnungen aufweisende Werkstücke während der Bearbeitung mit der Räumnadel zentriert werden, ergibt sich ein besonders genauer Rundlauf. Dadurch ist es möglich, eine genaue Basis zwischen Zahnfuss - Zahnflanke und Zahnkopf herzustellen.

**Patentansprüche**

1. Räumwerkzeug, insbesondere Räumnadel, mit mindestens einem Grundkörper (**26**, **26'**, **32**), dessen Aussenfläche (**24**, **24'**, **24''**) im spanabhebenden Arbeitsbereich (44) eine Beschichtung (28, 28', 28'') aufweist, die aus einer Trägerschicht (40) und darin eingebetteten Schleifkörnern (42) besteht, von denen mindestens ein Grossteil aus der Trägerschicht (40) herausragt und in einer mindestens annähernd parallel zur Ziehrichtung (20) verlaufenden Arbeitsfläche (46) angeschliffen ist, **dadurch gekennzeichnet,** dass die beschichtete Aussenfläche (24, 24', 24'') des Grundkörpers (26, 26', 32) von seinem in Ziehrichtung (20) vorn liegenden vorderen Ende (34) in Richtung seines hinteren Endes (36) ansteigt, bezogen auf eine parallel zur Ziehrichtung (20) liegende Fläche (38), und dass der Anschliff der Schleifkörner (42) vom vorderen Ende (34) in Richtung des hinteren Endes (36) stetig zunimmt.

2. Räumwerkzeug nach Anspruch 1, dadurch gekennzeichnet, dass die Trägerschicht (40) mindestens annähernd gleichbleibend dick ist.

3. Räumwerkzeug nach Anspruch 2, dadurch gekennzeichnet, dass die Schleifkörner (42) im wesentlichen einheitlich gross sind und die Trägerschicht (40) in ihrer Dicke überragen.

4. Räumwerkzeug nach einem der vorstehenden Ansprüche, dadurch gekennzeichnet, dass die Beschichtung (28, 28', 28'') etwa 0,2 mm dick ist.

5. Räumwerkzeug nach einem der vorstehenden Ansprüche, dadurch gekennzeichnet, dass die Trägerschicht (40) im wesentlichen aus Nickel besteht.

6. Räumwerkzeug nach einem der vorstehenden Ansprüche, dadurch gekennzeichnet, dass es als eine im Querschnitt runde Räumnadel ausgebildet ist, deren Grundkörper im Arbeitsbereich als Aussenfläche eine Kegelmantelfläche aufweist, deren Achse sich parallel zur Ziehrichtung erstreckt.

7. Räumwerkzeug nach einem der vorstehenden Ansprüche, dadurch gekennzeichnet, dass eine Räumnadel eine Mehrzahl von gleichartigen oder unterschiedlichen beschichteten Gliedern (16, 18) aufweist.

8. Verfahren zur Herstellung des Räumwerkzeuges nach einem der vorstehenden Ansprüche, **dadurch gekennzeichnet,** dass auf mindestens eine Aussenfläche (24, 24', 24'') des Grundkörpers (26, 26', 32), welche Aussenfläche von dem in Ziehrichtung (20) vorn liegenden vorderen Ende (34) des Grundkörpers in Richtung seines hinteren Endes (36) ansteigt, bezogen auf eine zur Ziehrichtung (20) parallele Fläche (38), eine eine Trägerschicht (40) und darin eingebettete Schleifkörner (42) enthaltende Beschichtung (28, 28', 28'') gleichmässiger Dicke aufgebracht wird und dass die aus der Trägerschicht (40) herausragenden Schleifkörner (42) auf eine im wesentlichen zur Ziehrichtung (20) parallele Arbeitsfläche (46) angeschliffen werden.

Fig.1
Fig.2
Fig.3
Fig.4
Fig.5
Fig.6
Fig.7

Fig.8

EP 0 447 996 A1

| Europäisches Patentamt | EUROPÄISCHER RECHERCHENBERICHT | Nummer der Anmeldung |
|---|---|---|
| | | EP 91 10 4082 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 9, Nr. 326 (M-441)[2049], 21. Dezember 1985; & JP-A-60 161 023 (MITSUBISHI) 22-08-1985 * Das ganze Artikel * | 1-3,6,8 | B 23 D 43/00 |
| X | DE-A-1 912 916 (DAIMLER-BENZ) * Seite 3; Figuren 1-3 * | 1-3,5,8 | |

| | | | RECHERCHIERTE SACHGEBIETE (Int. Cl.5) |
|---|---|---|---|
| | | | B 23 D 43/00 B 23 F 21/00 |

Der vorliegende Recherchenbericht wurde für alle Patentansprüche erstellt

| Recherchenort | Abschlußdatum der Recherche | Prüfer |
|---|---|---|
| Den Haag | 17 Juni 91 | BOGAERT F.L. |